# EUROPEAN PATENT SPECIFICATION

(11) **EP 3 290 334 B1**
(45) Date of publication and mention of the grant of the patent: **11.08.2021**
(21) Application number: 17188895.1
(22) Date of filing: 31.08.2017
(51) Int. Cl.: B64C 29/00, B64C 11/00, B64C 39/02, B64D 27/24

(54) **AIRCRAFT FOR VERTICAL TAKE-OFF AND LANDING**
FLUGZEUG FÜR VERTIKALES STARTEN UND LANDEN
AÉRONEF À DÉCOLLAGE ET ATTERRISSAGE VERTICAL

(30) Priority: 31.08.2016 US 201615252297
(43) Date of publication of application: 07.03.2018
(73) Proprietor: Sunlight Aerospace Inc., Edison, NJ 08817 (US)
(72) Inventor: Frolov, Sergey V., New Providence, NJ New Jersey 07974 (US); Cyrus, Michael, Castle Rock, CO Colorado 80104-7718 (US); Moussouris, John Peter, San Francisco, California 94115 (US)
(74) Representative: Zimmermann & Partner Patentanwälte mbB

(56) References cited:
- WO-A2-2014/021798
- US-A- 2 509 442
- US-A- 5 320 305
- US-A1- 2006 192 046
- US-A1- 2007 215 748
- US-A1- 2011 315 806
- US-A1- 2013 026 303
- US-A1- 2013 062 455

## Description

### FIELD

Embodiments of the present invention generally relate to an aircraft and methods for vertical take-off and landing (VTOL) for application in at least airborne transportation and other applications, and in particular to those for enabling massively scalable modular transportation of passengers and cargo based on vertical take-off and landing of airborne vehicles.

### BACKGROUND

Modern airborne transportation is primarily based on large size fixed-wing aircraft that can transport relatively large number of passengers and amount of cargo between a limited number of airports, which are areas specially created for take-off and landing of regular aircraft. As a result, such a transportation system is limited in its abilities to remain economical and provide adequate services under increasing demands for faster, better and more reliable performance. Airports represent one of the most apparent bottlenecks in this system. They are expensive to operate for owners and inconvenient to use for customers. Existing airports are being utilized at close to capacity and additional ones are not built fast enough.

Existing airborne transportation systems are in many ways similar to ground-based centralized systems for public and mass transportation, well-known examples of which are ones based on railroad and highway bus transport. Such systems lack the flexibility and convenience of a distributed transportation system, such as for example a taxicab transportation service. For example, document WO 2014/021798 A2 describes a system providing vertical take off and landing for military aircrafts or civilian airplanes, unmanned aerial vehicles and so on. Document US5320305 discloses a VTOL aircraft using air vents.

Therefore, the inventors have provided an improved airborne transportation system, which provides one or more benefits of distributed transportation.

### SUMMARY

Embodiments of the present invention are in accordance with the appended claims.

### BRIEF DESCRIPTION OF THE DRAWINGS

Embodiments of the present invention, briefly summarized above and discussed in greater detail below, can be understood by reference to the illustrative embodiments of the invention depicted in the appended drawings. It is to be noted, however, that the appended drawings illustrate only typical embodiments of this invention and are therefore not to be considered limiting of its scope, for the invention may admit to other equally effective embodiments. Some of the drawings show examples not covered by the claims but useful for understanding the invention.
Figure 1 shows an airborne system for distributed transportation of passengers and cargo.
Figure 2 shows an exemplary fixed-wing aircraft with vertical take-off and landing (VTOL) capabilities.
Figure 3 shows an exemplary fixed-wing aircraft with vertical take-off and landing (VTOL) capabilities having shuttered fan openings in a VTOL vehicle configuration.
Figure 4 shows a VTOL design in which the propulsion is provided by two ducted fans.
Figure 5 shows an exemplary method for providing distributed airborne transportation services.
Figure 6 shows schematically an example of a loading method.

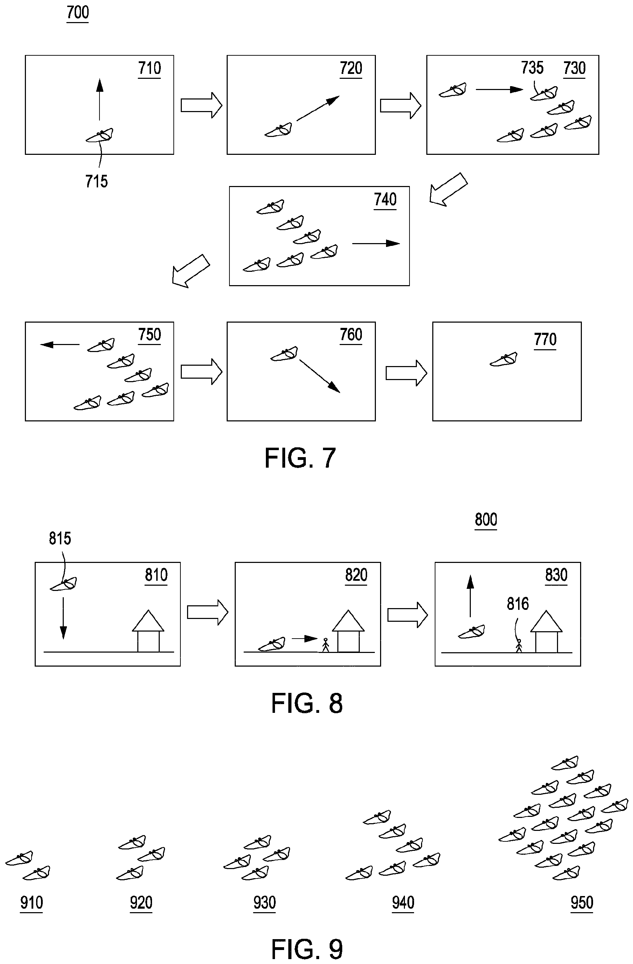

Figure 7 shows schematically an example of a travel method.
Figure 8 shows schematically an example of a loading method.
Figure 9 shows examples of several fleet configurations.

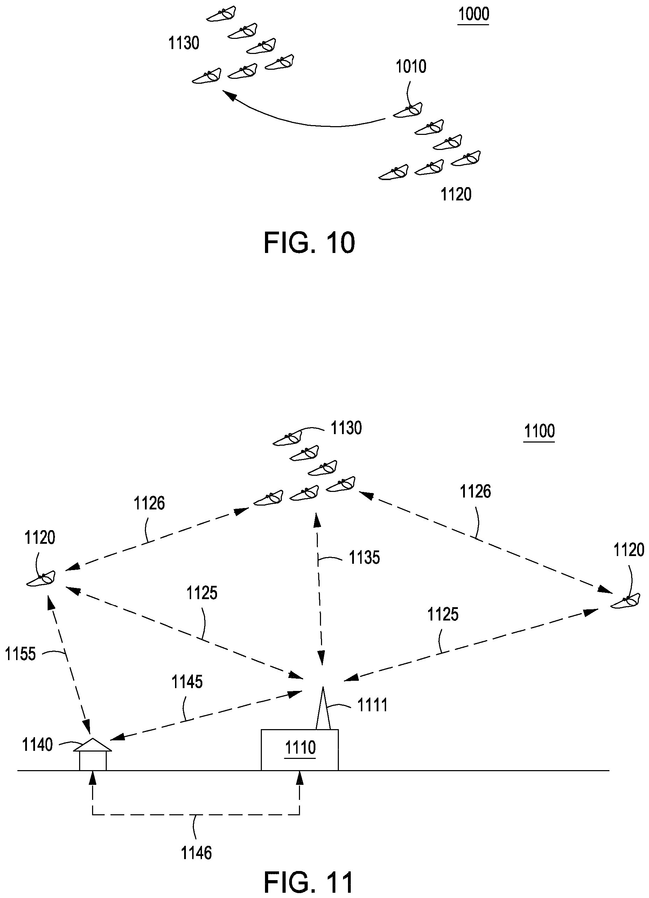

Figure 10 shows schematically an example of a portion of a travel method.
Figure 11 shows a distributed transportation system.
Figure 12 shows a distributed transportation system.
Figure 13 shows a top view of a distributed transportation system.
Figure 14 shows a functional block diagram of an aircraft.
Figure 15 shows a high level diagram of a wing assembly.
Figure 16 shows a high level diagram of a wing assembly.
Figure 17 shows a free-standing shaft-less propeller assembly.
Figure 18 shows a cross-sectional diagram of an exemplary mounting approach for shaft-driven propellers, such as the propellers of Figure 15.
Figure 19 shows a cross-sectional diagram of an exemplary mounting approach for rim-driven propellers, such as the propellers of Figure 16.
Figure 20 shows a high level, cross-sectional diagram of a portion of a wing assembly.
Figure 21 shows a high level, top view diagram of a portion of a wing assembly, such as the wing assembly of Figure 20.
Figure 22 shows a high level, top view diagram of a portion of a wing assembly.
Figure 23 shows a high level, top view diagram of a portion of a wing assembly.
Figure 24 shows a high level diagram of an air vent assembly including air vent flaps.
Figure 25 shows a high level diagram of a wing assembly.
Figure 26 shows a cross-sectional diagram of an exemplary mounting approach for vertical thrusters.
Figure 27 shows a high level diagram of a wing assembly.
Figure 28 shows a high level diagram of an aircraft assembly.
Figure 29 shows a high level diagram of an aircraft assembly.
Figure 30 shows a high level diagram of an aircraft assembly.
Figure 31 shows a high level diagram of an aircraft assembly.
Figure 32 shows a high level diagram of an aircraft assembly.
Figure 33 shows a three-dimensional view of an aircraft assembly, such as the aircraft assembly of Figure 32.
Figure 34 shows a high level diagram of an aircraft assembly.
Figure 35 shows a high level diagram of an aircraft assembly.
Figure 36 shows a high level diagram of the aircraft assembly of Figure 35 having a detached fuselage.
Figure 37 shows a high level diagram of a cargo pod.
Figure 38 shows schematically an example of a loading method.
Figure 39 shows a high level diagram of an aircraft assembly.
Figure 40 shows a high level diagram of a wing assembly.

To facilitate understanding, identical reference numerals have been used, where possible, to designate identical elements that are common to the figures. The figures are not drawn to scale and may be simplified for clarity. It is contemplated that elements and features of one embodiment may be beneficially incorporated in other embodiments without further recitation.

### DETAILED DESCRIPTION

In the following detailed description, numerous specific details are set forth in order to provide a thorough understanding of exemplary embodiments or other examples described herein. However, it will be understood that these embodiments and examples may be practiced without the specific details. In other instances, well-known methods, procedures, components, and/or circuits have not been described in detail, so as not to obscure the following description. Further, the embodiments disclosed are for exemplary purposes only and other embodiments may be employed in lieu of, or in combination with, the embodiments disclosed.

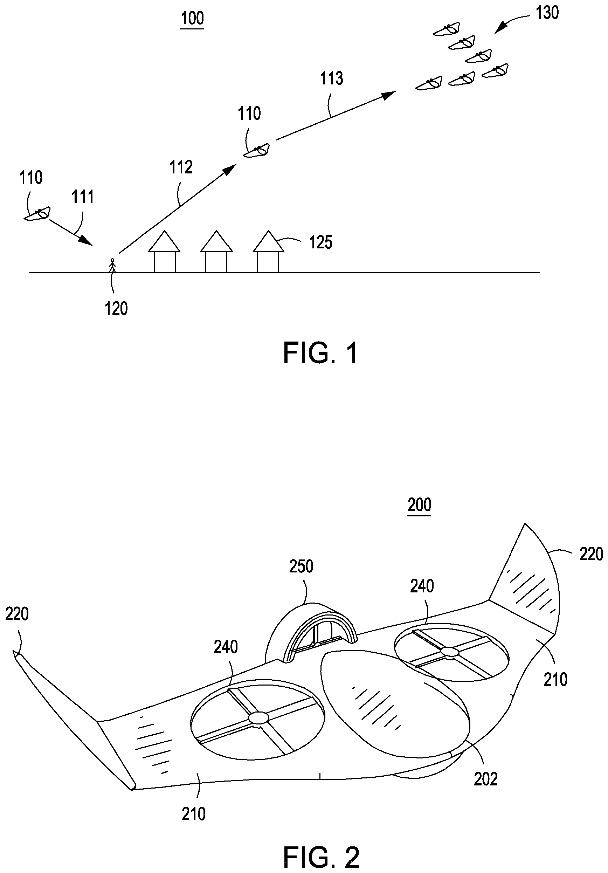

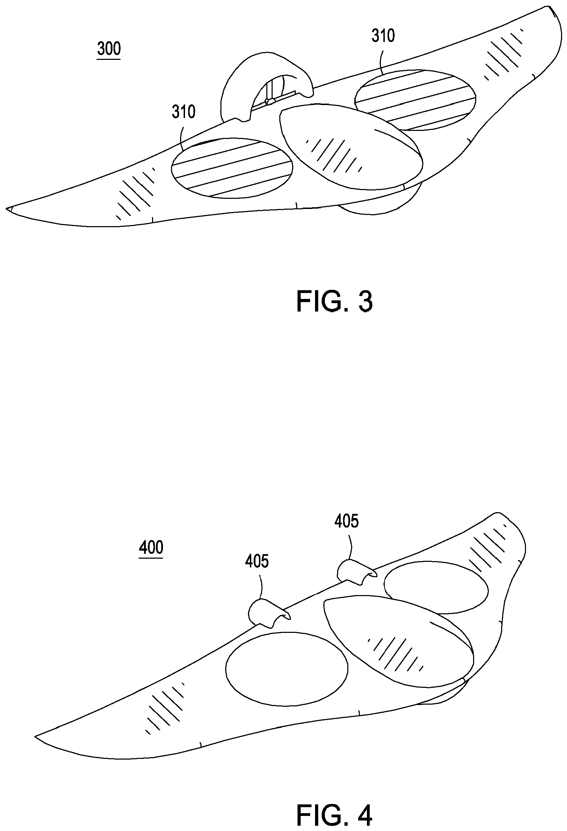

In accordance with embodiments of the present invention, one of the preferred vehicles for this system is a fixed-wing aircraft with vertical take-off and landing (VTOL) capabilities. It combines the advantages of being able to take-off and land outside of airports and fly at relatively high cruising speeds (e.g., relative to helicopters). Figure 2 shows, as an example of such an aircraft, a VTOL plane 200. This plane has tailless design using a fuselage 202 with sufficient room to accommodate one or more passengers. The wing sections, collectively 210, have built-in fans (or more generally vertical thrusters), collectively 240, for providing a vertical lifting force for take-off and landing. The wing section 210 may also fold its tips, collectively 220, for minimizing the size of the landing site. After a take-off, another motor with a propeller 250 (or more generally horizontal thrusters) may provide propulsion to achieve sufficient speed, at which the wing has enough lift and the fans can be turned off. At this point, the fan openings may be shuttered 310 as shown in Figure 3 in a VTOL vehicle configuration 300.

Of course many other VTOL vehicles designs may be possible within the scope of this invention. For example, Figure 4 shows a VTOL design 400 in which the propulsion is provided by two ducted fans, collectively 405. A preferred propulsion mechanism may include an electric motor with a propeller.

Also, the wing shape may take different forms. In addition, a VTOL design with a tail may be used as an alternative. Folding-wing and/or folding-tail designs are particularly attractive, because it allows VTOL vehicles to land in tighter areas on the ground. A foldable wing is shown as an example in Figure 2. Wings or some of their parts may be rotating to enable VTOL capabilities, in which for example a motor attached to the wing may be rotated by at least 90 degrees. Alternatively, other sections of the airframe may be rotating, e.g., the fuselage or some of its sections.

Various power systems and their combinations may be used for powering such vehicles, including fossil fuels, electric batteries, fuel cells, solar power, and other renewable power sources. A particularly attractive solution for this application comprises an electrically powered VTOL plane with additional solar photovoltaic (PV) power system, because of its efficiency and low noise. In addition, kinetic energy conversion systems may also be used as alternative energy sources, particularly in emergency situations. A preferred power system may have several redundant power sources, such as electrical batteries, fuel cells, and solar cells.

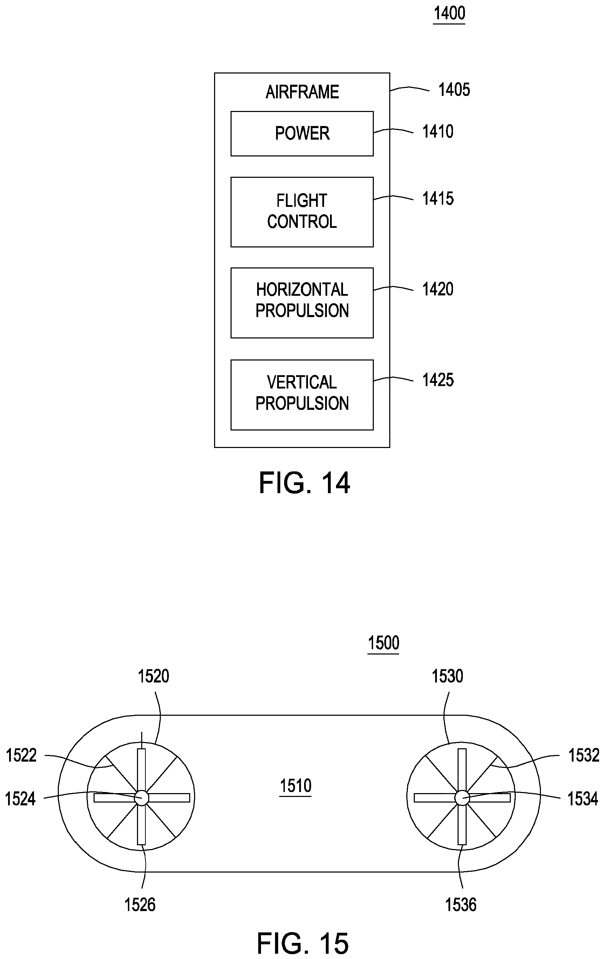

In accordance with various embodiments of the present invention, one of the preferred vehicles for the above described methods and system is a fixed-wing aircraft with vertical take-off and landing (VTOL) capabilities. Such an aircraft of the present invention combines the advantages of being able to take-off and land outside of airports and fly at relatively high cruising speeds (e.g., relative to helicopters). Figure 14 shows a functional block diagram of an aircraft, illustratively a VTOL plane 1400, in accordance with an embodiment of the present invention. The functional block diagram of the VTOL plane 1400 of Figure 4 illustratively includes an airframe 1405 and systems for power (power system 1410), flight control 1415, horizontal 1420 and vertical propulsion 1425. As will be depicted and described with reference to figures described below, the airframe 1405 may include one or more wing portions, a fuselage, and an empennage (a tail section). In accordance with various embodiments of the present invention, parts of the airframe 1405 may be modular and/or may be able to change its form (e.g. a modular fuselage that can be separated into multiple sections, a foldable wing that can change its shape in flight, etc.). In various embodiments of the present invention, the power system 1410 may include fuel storage and fuel distribution subsystems, electrical storage (e.g. batteries), power generation units (e.g. solar photovoltaic power systems, fuel cells and electrical generators), electrical power distribution circuits and power electronics (not shown). The horizontal and vertical propulsion systems may include propulsion means, such as propellers, turbines and jets, powered by engines and/or electrical motors. The horizontal and vertical propulsion systems may be separate from each other, so that they can be designed and operated independently.

VTOL aircraft in accordance with various embodiments of the present invention, unlike more conventional VTOL aircraft, can have several distinguishing features. In one embodiment in accordance with the present invention, a VTOL aircraft has separate propulsion systems for vertical and horizontal transport, so that the vertical propulsion system serves primarily the purpose of providing the vertical (upward) thrust and the horizontal propulsion system serves primarily the purpose of providing the forward thrust. Such embodiments enable a more efficient design, the ability of separate optimization and better performance of each propulsion system. Such embodiments also enable integration of very different propulsion mechanisms, for example jet propulsion and propeller-driven propulsion for the horizontal and vertical propulsion systems, respectively, or vice versa.

In alternate embodiments, the vertical propulsion system may be housed in the main wing of a VTOL aircraft, rather than a separate part of the airframe. In such embodiments, the housing for vertical thrusters may be integrated into the wing structure. To achieve this, the wing of a VTOL aircraft may include openings for vertical thrusters. As a result, the wing may serve a dual purpose of housing the vertical propulsion system and providing the lift force during the horizontal flight phase. The lift force may be provided by the entire surface of the wing including the wing portion with the openings and housing for the vertical thrusters. The extension of the lifting surface to the area around the wing openings may be accomplished by providing a continuous airfoil shape throughout the wing, including the openings.

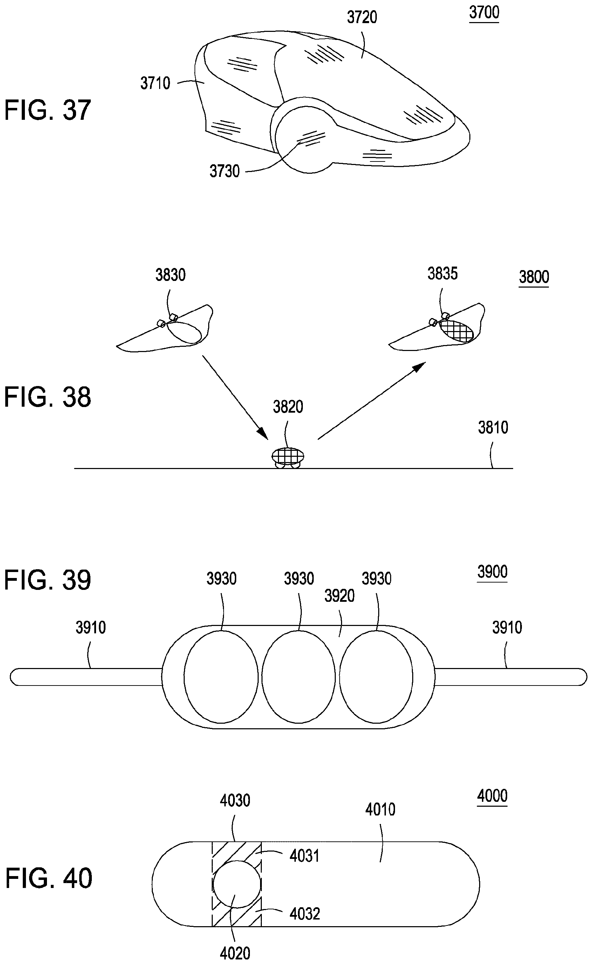

In order to further illustrate this point, Figure 40 shows a wing assembly 4000, comprising a wing surface 4010 and at least one wing opening 4020 for housing a vertical thruster (not shown). Also a section of the wing 4030 around the wing opening 4020 is highlighted. The section 4030 may in turn comprise at least the bow section 4031 and the aft section 4032, which are the areas of the wing immediately before and after the wing opening 4020, respectively, along the flight direction of the wing. The whole section 4030 and the sections 4031 and 4032, in particular, may be shaped to have airfoil profiles to minimize the drag and provide the aerodynamic lift force.

The wing openings for vertical propulsion system include air vents, which may be closed to cover vertical thrusters and create a continuous wing surface on both sides of the wing in the horizontal flight phase. This may further increase the lift force of the wing in the horizontal flight phase by increasing the area of the wing lifting surface. The air vents may include flaps that allow the wing to form a continuous airfoil surface on both sides of the wing in the wing opening area. Such an embodiment enables integration of much larger vertical thrusters and/or larger number of vertical thrusters than would be possible without the air vents.

In various embodiments of the present invention, vertical thrusters may have slim profiles to fit inside the wing openings. The wing thickness in the area of the wing opening should be sufficiently large to encompass the entire vertical thruster assembly and enable any existing air vent to close. Various embodiments enabling the slim design are depicted and described with reference to the following Figures, including, in particular, shaft-less vertical thrusters described below.

In various examples not covered by the claims but useful to understand the invention, the vertical and horizontal propulsion systems may function independently from each other and their operation may be enabled by either a single flight control system or a dual flight control system; the latter comprising two flight control subsystems, which control the vertical and horizontal propulsion systems, respectively. In such embodiments, the two propulsion systems may also operate concurrently, simultaneously providing the vertical and horizontal thrusts, for example during a transition period between the vertical flight and horizontal flight phases. In such embodiments, a hybrid flight control mode may be executed by the flight control system that enables and synchronizes the simultaneous operation of the vertical and horizontal propulsion systems. Due to the complexity of such an operation, in such embodiments, flight control modes may be at least in part automated.

In accordance with various embodiments, a VTOL aircraft of the present invention may enable hybrid flight modes unavailable in a conventional aircraft, in which the vertical and horizontal propulsion systems are operated simultaneously. For example, in one embodiment the propeller-based vertical thrusters may provide lift in the horizontal flight phase using auto-gyro effect, as described in more detail below. In alternate embodiments, the vertical thrusters may be used in the horizontal flight phase for attitude changes of an aircraft in place of conventional flight control surfaces, such as ailerons, elevators and rudders, which is described in further detail below.

Figure 15 shows a high level diagram of a wing assembly 1500 in accordance with an embodiment of the present invention. The wing assembly 1500 of Figure 15 illustratively includes a wing body 1510, and wing openings 1520, 1530 that are used for housing vertical propulsion fans or thrusters consisting of mounting frames 1522 and 1532, motor shafts 1524 and 1534, and propellers 1526 and 1536. In accordance with various embodiments of the present invention, a wing assembly may include one or more opening for mounting a vertical propulsion assembly. The wing openings provide an airflow passage through a wing, which is necessary for achieving a vertical thrust for either take-off or landing. In accordance with various embodiments, the propellers 1526 and 1536 may have either fixed or variable pitch, allowing for a greater flexibility in the design and operational capabilities of an aircraft, such as a VTOL aircraft of the present invention. In various alternate embodiments of the present principles, engines and other torque-producing machines may be used in place of motors used to drive the propellers.

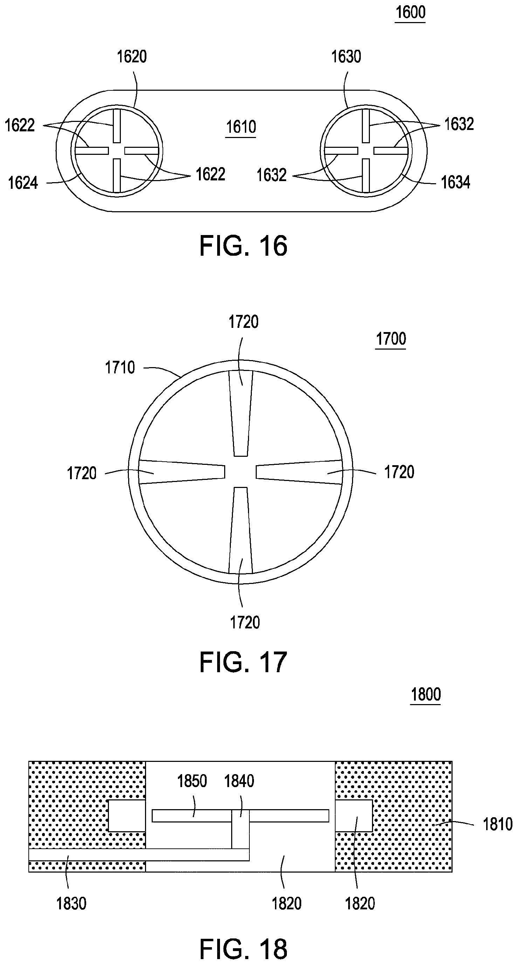

Figure 16 shows a high level diagram of a wing assembly 1600 in accordance with an alternate embodiment of the present invention. The wing assembly 1600 of Figure 16 illustratively includes a wing body 1610, and wing openings 1620 and 1630 that are used for housing vertical thrusters consisting of shaftless propellers 1622 and 1632, and rims 1624 and 1634. In the embodiment of Figure 16, the propellers 1622 and 1632 are attached to the respective rims, which are in turn connected to the frames of the wing openings 1620 and 1630 in such a way as to allow the rims to rotate freely around their respective axes. In one embodiment of the present invention, this is achieved by using either contact suspension, e.g. with ball bearings, or contactless suspension, discussed in more detail below. In alternate embodiments of the present invention, the rims may also contain ring motors or parts of ring motors that provide the torque required for their rotation.

For purposes of clarification, Figure 17 shows a blown-up view of a free-standing, shaft-less propeller assembly 1700 in accordance with an embodiment of the present invention. The propeller assembly 1700 of Figure 17 illustratively includes a rim 1710 and four propeller blades 1720. It should be noted that, in accordance with the present principles, the number of propellers may vary, however, it may be preferred to have at least two blades for a balanced rotation. The propeller blades may have either fixed or variable pitch. In various embodiments of the present principles, the whole or a part of the assembly 1700 may be constructed from lightweight composite materials, either as a single piece or from multiple pieces. The advantages of such a shaft-less, rim-driven propeller in comparison to a typical shaft-driven propeller include at least greater propeller efficiency, more compact design, lower profile, lower weight due to lack of a shaft and its mounting frame.

Figure 18 shows an exemplary mounting approach 1800 for shaft-driven propellers, such as the propellers 1526, 1536 of Figure 15 in accordance with an example not covered by the claims but useful to understand the invention. In the embodiment of Figure 18, the wing body 1810 includes an opening 1820 for housing a mounting frame 1830. The opening 1820 may be used for attaching a shaft 1840 with mounted propeller 1850. The shaft 1840 may comprise an electric motor (not shown) or other engine (not shown) for rotating the propellers with respect to the frame 1830. As depicted in the illustrative embodiment of Figure 18, the opening 1820 may have an additional clearance for the blades of the mounted propeller 1850.

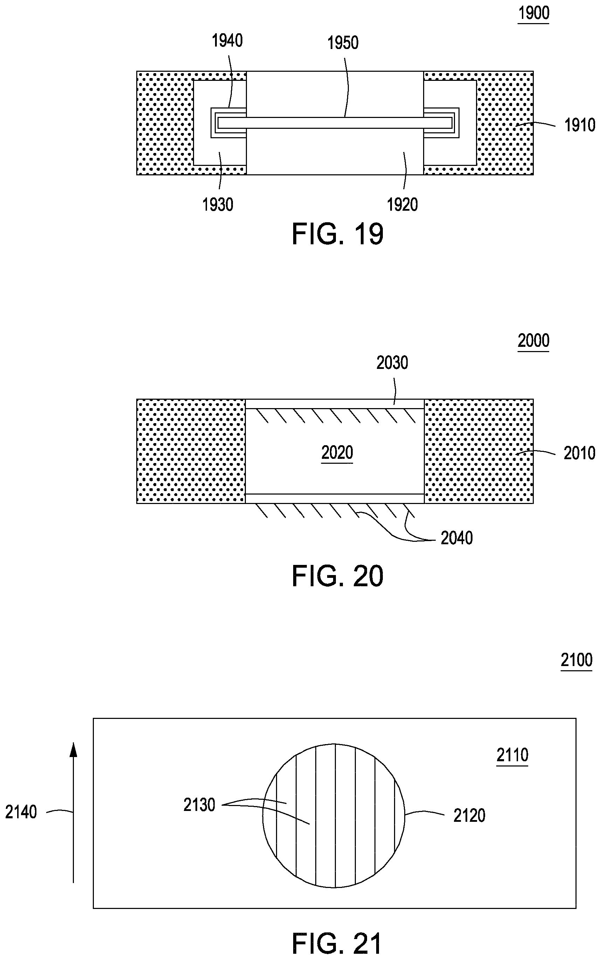

Figure 19 shows an exemplary mounting approach 1900 for rim-driven propellers, such as for example the propellers 1622 and 1632 of Figure 16 in accordance with an embodiment of the present invention. In the embodiment of Figure 19, the wing body 1910 includes an opening 1920 and a suspension mechanism 1930. The suspension mechanism 1930 may be used for holding a rim 1950 with rim-mounted propeller blades (not shown). The suspension mechanism may be in mechanical contact with the rim 1950 using a ball bearing assembly 1940 or other friction-reducing apparatus. Alternatively, a contactless suspension may be used, for example such as magnetic suspension systems or a suspension system based on pressurized air streams. In an embodiment including magnetic suspension, electrically activated and permanent magnets may be used to levitate the rim 1950 between the edges of the suspension mechanism 1930. In an embodiment including air stream suspension, high pressure air streams can be blown into the gap between the rim 1950 and the suspension mechanism 1930, allowing the rim 1950 to hover and maintain separation with the suspension mechanism 1930. In various embodiments, the rim 1950 and suspension mechanism 1930 may be integrated together with an electric motor (not shown) for rotating the rim 1950 with respect to the frame wing body 1910. For example, in such an embodiment, the rim 1950 may contain the rotor of a ring motor, while the suspension mechanism 1930 may contain the stator of the ring motor.

Figure 20 shows a high level cross-sectional diagram of a portion of a wing assembly in accordance with an alternate embodiment of the present invention. Illustratively, in the embodiment of Figure 20, air vents 2030 are included to provide, for example, vertical thrust generation. That is, the wing assembly 2000 shown in Figure 20 may include a wing body 2010, a wing opening 2020, and air vents 2030. The air vents 2030 may be opened and closed using louvres or flaps 2040. The wing opening 2020 may be used to house a thruster, which is not shown in Figure 20. The air vents 2030 in the open position allow the air flow to pass from the top to the bottom of the wing through the wing opening, and in the closed position extend the closed area of the wing and increase the lift force and cover and protect the vertical thruster housed inside the wing opening.

Figure 21 shows a high level, top view diagram of a portion of a wing assembly 2100, such as the wing assembly of Figure 20, in accordance with an embodiment of the present invention. The wing assembly 2100 of Figure 21, illustratively includes a wing body 2110, an opening 2120 and air vent flaps 2130. The air vent flaps 2130 may be aligned along the direction of flight 2140.

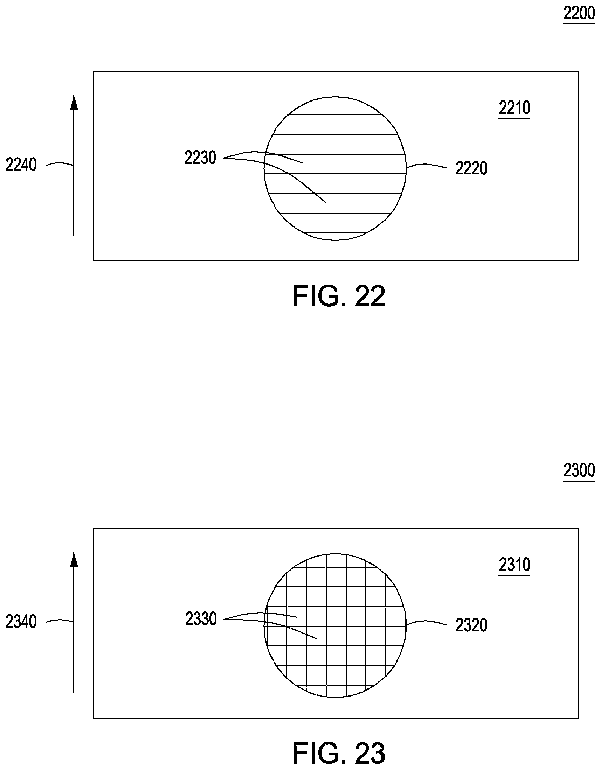

Figure 22 shows a high level, top view diagram of a portion of a wing assembly 2200 in accordance with an alternate embodiment of the present invention. The wing assembly 2200 of Figure 22 illustratively includes a wing body 2210 with an opening 2220 and air vent flaps 2230 perpendicular to the flight direction 2240. In some applications, the wing assembly 2200 of Figure 22 may be more beneficial than the wing assembly 2100 of Figure 21, because it allows the flap surfaces in their closed position to better follow the airfoil contour of the wing assembly 2200.

Figure 23 shows a high level, top view diagram of a portion of a wing assembly 2300 in accordance with yet another alternate embodiment of the present invention. The wing assembly 2300 of Figure 23 illustratively includes a wing body 2310, a wing opening 2320 and air vent flaps 2330, illustratively arranged in a rectangular grid pattern. The air vent flaps 2330 of Figure 23 provide more flexibility in the aircraft design and operation and improves its performance by providing higher lift in forward flight.

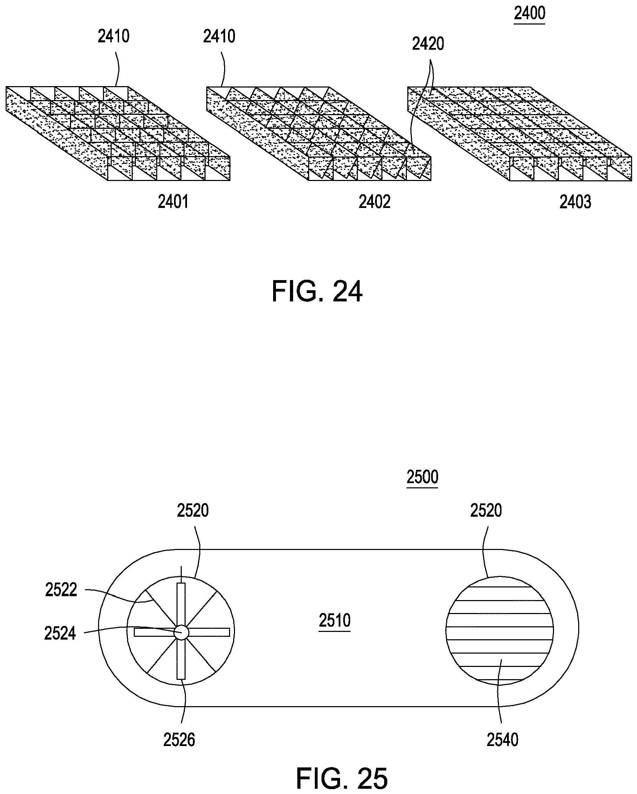

Figure 24 shows a high level diagram of an air vent assembly including air vent flaps in accordance with an embodiment of the present invention. The air vent flaps of the present invention may be opened and closed either individually or together. The air vent 2400 of Figure 24 illustratively includes a vent grid 2410 and vent flaps 2420. In the air vent assembly 2400 of Figure 24, three different vent configurations 2401, 2402, and 2403 are shown corresponding to open, partially open and closed vent positions, respectively. In the embodiment of Figure 24, a rectangular vent grid 2410 is chosen, however, many other shapes, forms and sizes are possible within the scope of this invention (e.g. square, round, oval, polygonal etc.). The vent flaps 2420 may also include hinges (not shown) and actuators (not shown) that enable the opening and closing of the flaps. In various embodiments, the actuators may be powered mechanically, electrically or pneumatically to provide an active force for the actuation. Alternatively, the actuators may be passive, for example the flaps may be spring-loaded, so that under normal conditions when the vertical thrusters are not activated, they are in a closed position, but they may open under the influence of the vertical airflow when the thrusters are producing vertical thrust. In addition to flaps, other air vent shuttering mechanisms may be used, including sliding screens, diaphragm shutters, folding doors, rolling shutters and so on in accordance with various embodiments of the present invention.

Figure 25 shows a high level diagram of a wing assembly 2500 in accordance with an embodiment of the present invention. The wing assembly 2500 of Figure 25 illustratively includes a wing body 2510 and wing openings 2520. The wing openings 2520 may be used to contain thrusters used for vertical propulsion comprising a frame 2522, a shaft 2524 and propeller blades 2526. Alternatively and as described above, a shaft-less vertical propulsion system may be used. As depicted in the wing assembly 2500 of Figure 25, in various embodiments of the present invention, at least one of the wing openings 2520 may include air vents 2540. The air vents 2540 may be opened to provide vertical airflow between the top and bottom of the wing assembly 2500, when the thruster is turned on to produce vertical thrust. The air vents 2540 may be closed when the aircraft is in a horizontal flight phase, when the horizontal thruster is engaged and the lift is generated primarily by the wing, rather than the vertical propulsion system. The closed air vents 2540 may closely reproduce the shape of the wing airfoil, so that the wing section with the openings may be able to generate substantially the same lift as the whole wing sections and the overall aerodynamic lift is maximized and the total drag is minimized.

In accordance with examples not covered by the claims but useful to understand the invention, a method for transitioning from vertical to horizontal flight of a VTOL aircraft is provided, in which the horizontal propulsion system provides forward thrust and the vertical propulsion propellers are enabled to auto-rotate and provide at least a portion of the lift necessary to maintain a level flight. The auto-rotation may occur when the propellers are allowed to spin freely. At least for this purpose the vertical propulsion system may include a gearbox, which may enable for the vertical thruster propellers to disengage from the motor (or other torque-producing machine), switch to a neutral gear and enable free rotation of the vertical thruster propellers. In addition, the gearbox may be used to change the gear ratio between the motor and the propellers allowing them to rotate at different rates, so that the vertical propulsion system may be used in different flight modes and different flight mission requiring different thrust capabilities. For example, an empty aircraft and fully loaded aircraft may have different weights and thus require different vertical thrusts, which can be changed and optimized by varying the gear ratio.

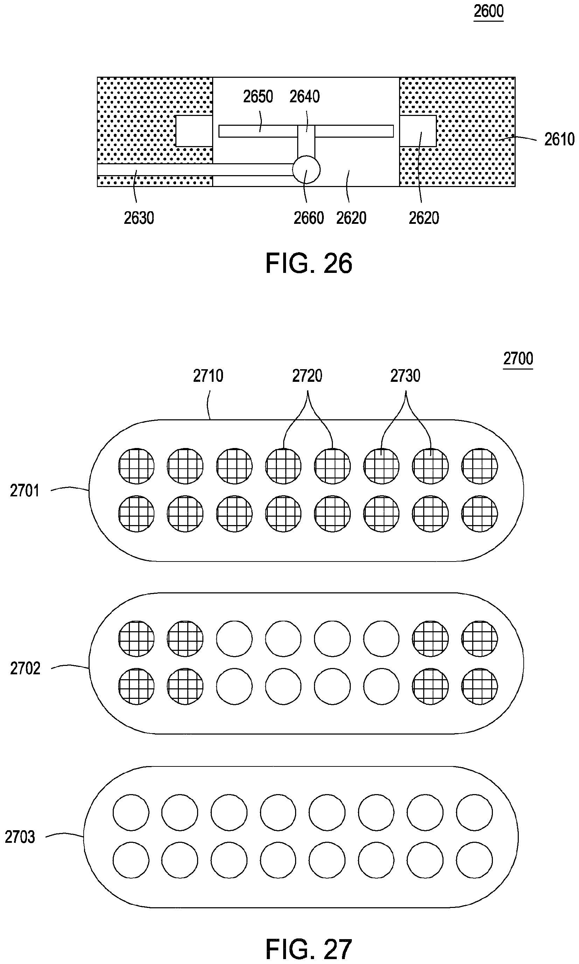

Figure 26 shows a cross-sectional diagram of an exemplary mounting approach 2600 for vertical thrusters in accordance with an alternate embodiment of the present invention. That is, Figure 26 shows a mounting approach 2600 for vertical thrusters with additional mechanical capabilities in accordance with an embodiment of the present invention. In the embodiment of Figure 26, the wing body 2610 may have an opening 2620 for housing a mounting frame 2630. The mounting frame 2630 may be used for attaching a gimbal mount 2660, which in turn may hold a motor shaft 2640 with shaft-mounted propellers 2650. The gimbal mount may have one or two axes of rotation and may be used to tilt the vertical thruster assembly with respect to the mounting frame 2630 and the rest of the airframe, which may be useful under different flight conditions. More specifically, during the vertical flight phase, when the lift is produced primarily by the vertical propulsion system, the tilting gimbal mount 2660 may be used to stabilize an aircraft and provide a horizontal thrust component in the direction determined by the tilt direction. During the horizontal flight phase, when the lift is produced primarily by the wings, the tilting gimbal mount 2660 may be used to control the autogyro lift produced by the auto-rotating propellers. This enables the independent control of the angles between the wing and the vertical thruster propellers. Alternatively, in alternate embodiments of the present invention, instead of shaft-mounted propellers, rim-mounted propellers (e.g. Figure 19), may be used to achieve a similar functionality. In such an embodiment, the rim assembly may be rotated as a whole around one or two axes to tilt vertical thrust in one or more directions.

In accordance with the present invention, the vertical propulsion system may comprise one or multiple thrusters, where each vertical thruster is housed in a separate opening of an aircraft wing. The number of thrusters may be selected depending on characteristics of the aircraft and the thrusters. Also, different thrusters (e.g. having different sizes or thrust capabilities) may be used in the same vertical propulsion system. For example, a delta-wing aircraft having a wing with a triangular shape, may have a vertical propulsion system with three thrusters. If similar propeller-based thrusters are used in this case, then each thruster may comprise two coaxial propellers that are counter-rotating with respect to each other to improve stability of the aircraft. The coaxial counter-rotating propellers may be also used in other configurations with different number of thrusters, in order to increase the total thrust while minimizing the footprint of the resulting vertical propulsion system. A system with a small number of thrusters may require relatively large and powerful thrusters, while a system with a larger number of thrusters may be able to function with much smaller, but more efficient thrusters as illustrated below.

Figure 27 shows a high level diagram of a wing assembly 2700 in accordance with the present invention. The wing assembly 2700 of Figure 27 illustratively includes a wing body 2710, multiple wing openings 2720 and air vents 2730. In the wing assembly 2700 of Figure 27, the wing openings 2720 may be used to house vertical thrusters. The air vents 2730 are opened and closed independently from each other as shown in Figure 27. That is, wing assembly 2701 depicts wing air vents which are all fully closed, wing assembly 2702 depicts some wing air vents which are open and some wing air vents which are closed and wing assembly 2703 depicts wing air vents which are all fully open. Such a configuration in accordance with embodiments of the present invention, enables the gradual adjustment of the vertical thrust produced by the thrusters and improves the transition between the vertical and the horizontal flight phases described above. In addition, in various embodiments of the present invention, vertical propellers may be allowed to auto-rotate in the horizontal flight phase and produce lift in the vent open positions.

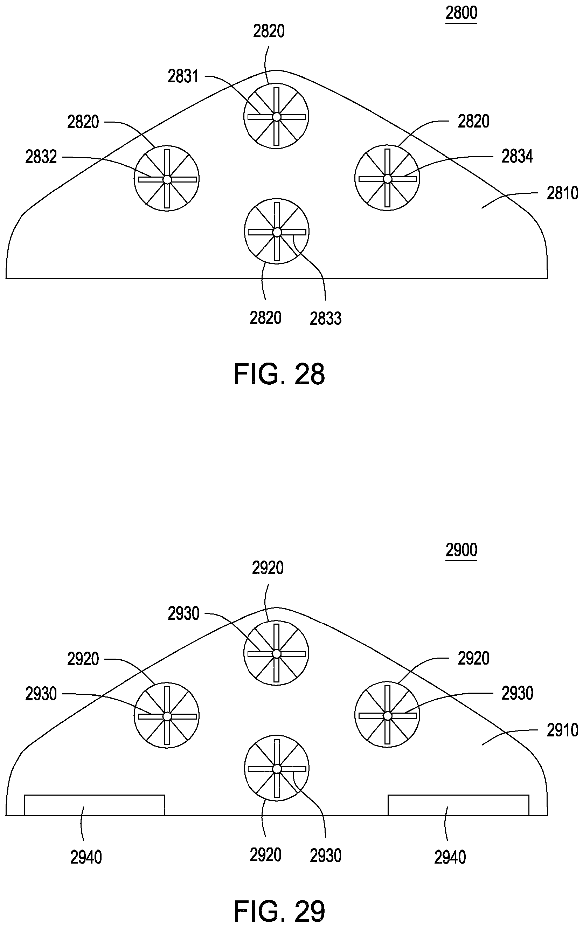

Figure 28 shows a high level diagram of an aircraft assembly 2800 in accordance with an embodiment of the present invention. In the embodiment of Figure 28, the aircraft assembly 2800 comprises a VTOL aircraft having a wing shape and as such, in various embodiments of the present invention, such as the embodiment of Figure 28, the entire aircraft assembly 2800 can be considered a wing or wing portion.

In accordance with the present invention, the aircraft assembly 2800 may be able to use the vertical thrusters for controlling its roll, yaw and pitch, which thus would enable not only the vertical take-off and landing, but also the maneuvering capabilities in the horizontal flight phase, such as turning, rolling, ascending and descending. For example, a positive vertical thrust provided by either of the propellers 2832 or 2834 may roll the aircraft assembly 2800 left or right, respectively and a vertical thrust provided by either the propellers 2831 or 2833 may pitch the aircraft assembly 2800 up or down, respectively. Maintaining the same thrust level by both thrusters in each pair of thrusters (2831 and 2833, or 2832 and 2834), so that they rotate in the same direction, may yaw the aircraft assembly 2800 to the left or to the right, thus turning the aircraft in a new direction. To compensate for unwanted roll, pitch and yaw all four thrusters may be turned on in order to provide a necessary maneuver. In various embodiments of the present principles, the aircraft assembly 2800 may include an automatic flight controller (an auto-pilot), which coordinates the torques and thrusts of all vertical thrusters in order to produce a desired maneuver involving changes in pitch, roll and yaw angles. The thrust produced by each thruster in this case may be substantially smaller than the thrust achieved during the vertical flight phase. In various embodiments of the present invention, the thrusters of the present invention can be controlled individually to provide flight control for the aircraft assembly of the present invention. That is, in accordance with various embodiments of the present invention, the thrusters can be individually turned on and off and the thrust of each thruster can also be controlled individually.

Figure 29 shows a high level diagram of an aircraft assembly 2900 in accordance with an example not covered by the claims but useful to understand the invention. The aircraft assembly 2900 of Figure 29 comprises a tailless aircraft including a wing portion 2910, wing openings, collectively 2920, vertical thrusters, collectively 2930, and ailerons, collectively 2940. The aircraft assembly 2900 of Figure 29 may further include a horizontal propulsion system (not shown). A difference between the aircraft assemblies 2800 and 2900 is that the latter has additional flight control surfaces that enable aircraft maneuvering in the horizontal flight phase. Unlike a regular plane, the aircraft assembly 2900 of the present invention has an option to use the vertical thrusters for horizontal maneuvering as described above with respect to the aircraft assembly 2800, which also increases its flight control redundancy and maneuvering capabilities in accordance with the present invention.

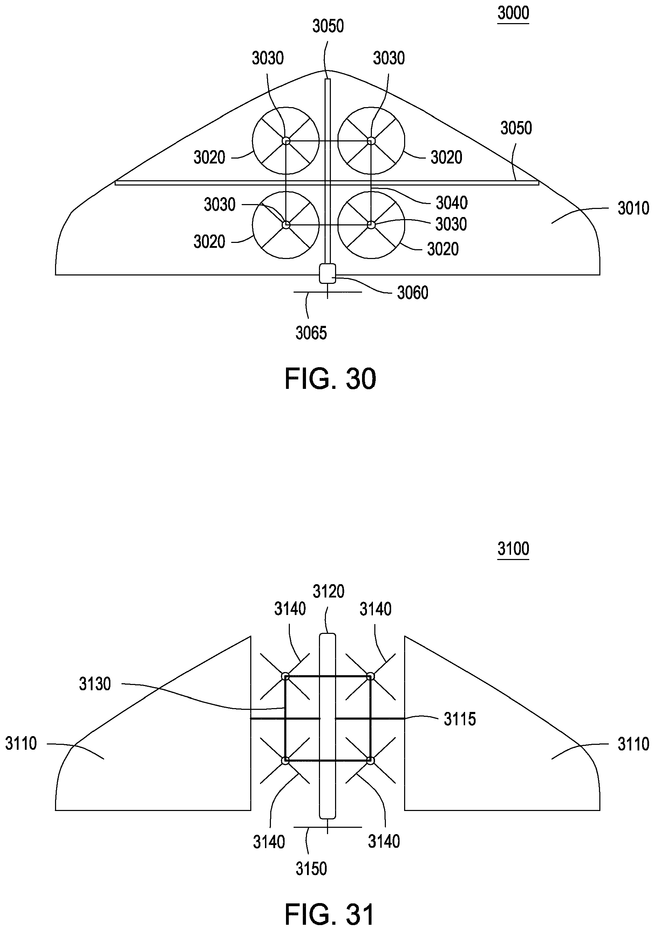

Figure 30 shows a high level diagram of an aircraft assembly 3000 in accordance with an example not covered by the claims but useful to understand the invention. The aircraft assembly 3000 of Figure 30 includes a wing portion 3010, wing openings, collectively 3020, vertical thrusters, collectively 3030, a vertical propulsion frame 3040, wing spars 3050 and a horizontal propulsion system with a motor 3060 and a propeller 3065. In various embodiments of the present invention, the vertical propulsion frame 3040 and wing spars 3050 may be imbedded in the aircraft assembly 3000 and hidden from view. The vertical propulsion frame 3040 and wing spars 3050 are shown in Figure 30 for clarity.

In the embodiment of Figure 30, the vertical propulsion frame 3040 is used to hold together the vertical thrusters 3030 and to transfer the vertical thrust produced by the vertical thrusters 3030 to the airframe of the aircraft assembly 3000. The rest of the airframe is mechanically supported by the wing spars 3050. In one embodiment of the present invention, the vertical propulsion frame 3040 is attached directly to the wing spars 3050. The horizontal propulsion system may be used to provide horizontal thrust to the airframe. In alternate embodiments of the present invention, other airframe components may be included in the VTOL aircraft assembly 3000, such as a payload bay (not shown), a fuselage (not shown), a tail (not shown), flight control surfaces (not shown), landing gears (not shown), additional motors and propellers (not shown), air vents (not shown), flight control systems (not shown), payloads (not shown) and others.

Figure 31 shows a high level diagram of an aircraft assembly 3100 in accordance with an example not covered by the claims but useful to understand the invention. The aircraft assembly 3100 of Figure 31 includes wing portions, collectively 3110, a wing spar 3115, a fuselage 3120, a vertical propulsion frame 3130, vertical thrusters, collectively 3140, and a horizontal thruster 3150. In the embodiment of Figure 31, the wing portions 3110 are sectioned into parts, so that the vertical propulsion frame 3130 may be inserted in a space between its sections as an alternative to wing openings. In this embodiment, the propulsion system is positioned between two halves of the wing portions 3110, which are held together by the wing spar 3115. In alternate embodiments of the present invention, the wing portions 3110 may be further subdivided into more sections with additional space for vertical thrusters and additional wing sections may be provided. Also, in alternate embodiments, additional flight control surfaces may be provided on the wing portions 3110 to control the horizontal flight path. Alternatively, the aircraft horizontal maneuvering may be controlled using the vertical thrusters.

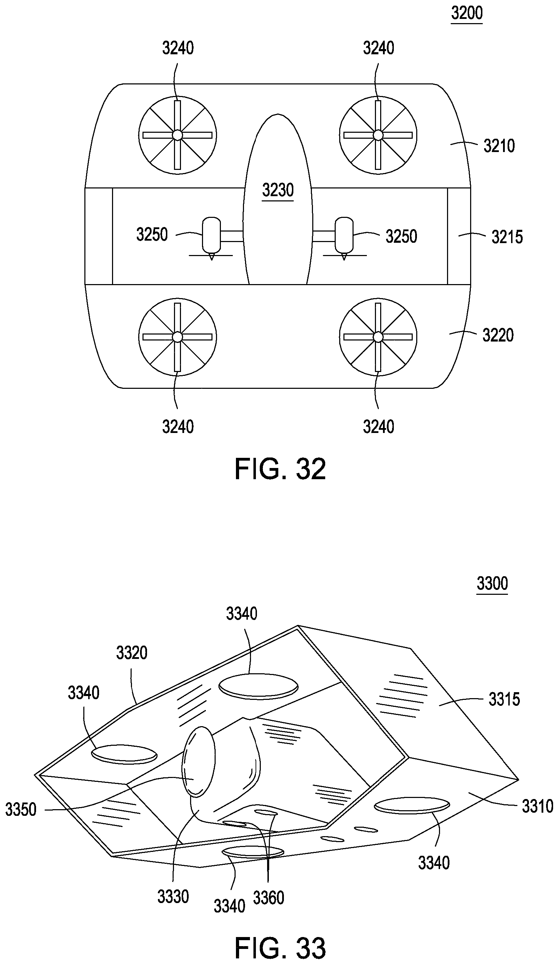

Figure 32 shows a high level diagram of an aircraft assembly 3200 in accordance with an example not covered by the claims but useful to understand the invention. The aircraft assembly 3200 of Figure 32 includes a first wing assembly 3210, a second wing assembly 3220, a fuselage 3230, a vertical propulsion system, collectively 3240 and a horizontal propulsion system, collectively 3250. In the embodiment of Figure 32, the vertical propulsion system 3240 includes four thrusters, while the horizontal propulsion system includes two thrusters. The first and second wing assemblies 3210 and 3220 may be connected by wing extensions 3215, thus producing a closed wing configuration. The aircraft assembly 3200 may also include landing gear (not shown) which enables the aircraft to land and move along the ground surface.

Figure 33 shows a three-dimensional view of an aircraft assembly, such as the aircraft assembly 3200 of Figure 32.

In the embodiment of Figure 33, the front (first) and back (second) wing sections are staggered and located in different vertical planes. The wing sections form a closed wing configuration, where the front and back wing sections are connected by vertical wing extensions 3315 that may also serve as vertical stabilizers. The closed wing configuration improves the aerodynamic performance of an aircraft, however, in various embodiments of the present invention, the first and second wings do not have to be connected via the wing extensions and may form other wing configurations. For example, bi-plane and canard wing configurations may also be suitable for a VTOL aircraft assembly in accordance with embodiments of the present invention. In alternate embodiments of the present invention, additional wing portions and lift-producing surfaces may also be added for improved performance. In such embodiments, at least some part of wing portions and lift-producing surfaces may be mechanically flexible so that the wing may change shape if necessary as shown in the embodiment of Figure 2. Alternatively or in addition, in various embodiments of the present principles one or both wings may be separable from the fuselage 3330, so that the fuselage 3330 or its parts may detached from the rest of the airframe and independently transported.

In accordance with embodiments of the present invention, the described VTOL aircraft of the present invention may be piloted and unpiloted. In the latter case, VTOL aircraft may be an unmanned airborne vehicle (UAV) with either an autonomous flight control system or a remotely controlled flight control system. Flight control systems may allow direct interactions with onboard passengers, such as providing destination requests, flight directions, alerts, communications and others. Flight control systems may allow direct interactions with onboard cargo, e.g. using electronic tags, machine-to-machine communications, and other cargo-embedded computer systems. Such a VTOL aircraft in general and VTOL UAV of the present invention in particular may be used for the automated transport of cargo and passengers, especially to and from locations that are inaccessible by other airborne aircraft. In addition to being used for transportation, a VTOL UAV in accordance with the present principles may be used for ground surveillance, weather monitoring, communications and many other applications.

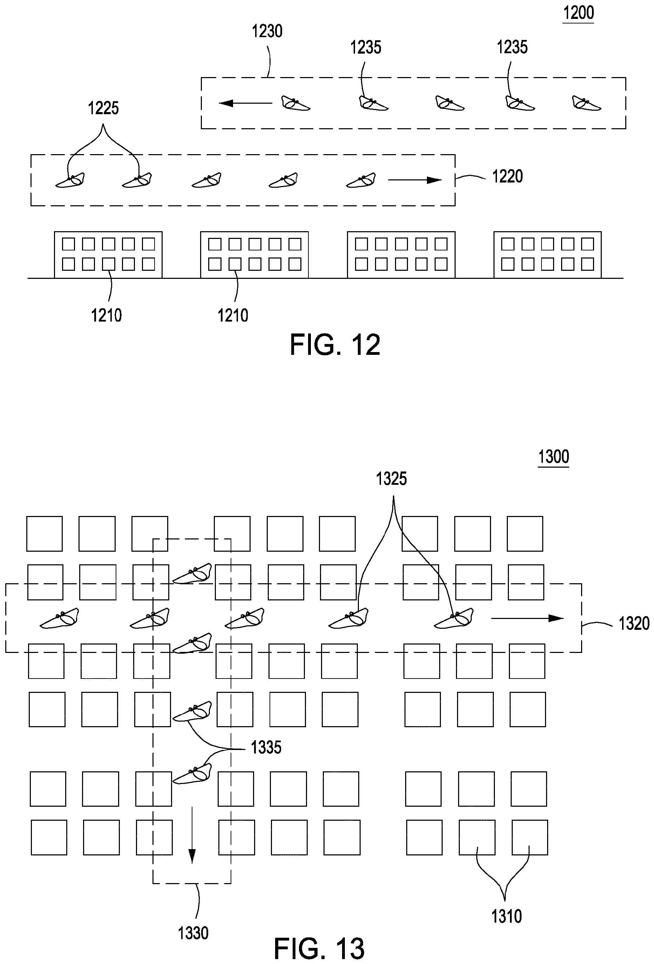

In accordance with embodiments of the present invention, the described VTOL aircraft may be used for different flight modes. The flight modes may include different forms of vertical and horizontal transport. Vertical transport modes may include single and multiple aircraft modes. The vertical transport may also be classified into several categories of coordinated and uncoordinated vertical take-off and landing, as well as vertical descent and ascent. Similarly the horizontal transport modes may include individual (i.e. single aircraft) flight (i.e. outside of any flight formation) and multiple aircraft flight modes as described above. The latter may further include uncoordinated, partly coordinated and fully coordinated flight modes. In the uncoordinated flight mode, each aircraft may not have to coordinate its flight plan with any other aircraft or any flight authority. The safety of the aircraft may be ensured either by a pilot or an onboard collision-avoidance system (i.e. as a part of an auto-pilot onboard of a UAV). In the partly coordinated flight mode, each aircraft may have at least some awareness of its surroundings and capabilities to coordinate its flight pattern with other aircraft either directly or through a centralized flight controller. For example, transportation systems 1200 and 1300 shown in Figure 12 and 13 may also include aircraft travelling in the partly coordinated flight mode. In the fully coordinated flight mode, the flight pattern of each aircraft is tightly coordinated with other aircraft in the vicinity. For example, formation flight and close formation flight are examples of a fully coordinated flight mode.

In accordance with embodiments of the present invention, a VTOL aircraft may use various power sources, including gas, liquid and solid fuels, electrical batteries and supercapacitors, regenerative and non-regenerative fuel cells, renewable power sources, such as solar, thermal and wind energy, and others. Various power conversion mechanisms may be used onboard, such as electrical generation for mechanical-to-electrical transfer, solar photovoltaics for optical-to-electrical transfer, thermovoltaics for thermal-to-electrical, and so on. To expedite power transfer some power modules may be swappable. For example, a depleted battery may be swapped with a freshly charged one. In addition, various power transfer mechanism may be used to transfer energy to a VTOL aircraft, including airborne refueling and wireless power beaming using optical and radio frequency beams. In such an embodiment of the present invention, the VTOL aircraft may be equipped with a refueling beam, high-power optical receivers and RF antennas, respectively.

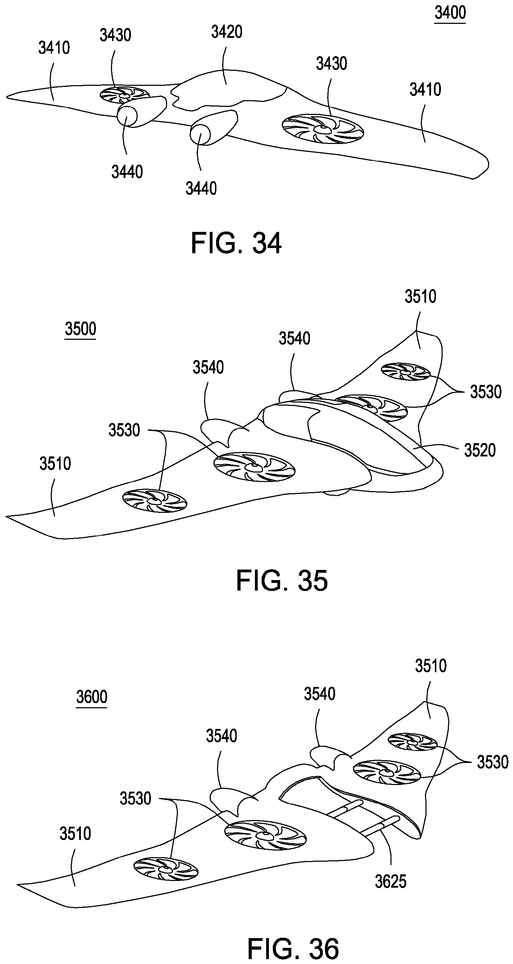

Figure 34 shows a high level diagram of an aircraft assembly 3400 in accordance with an alternate embodiment of the present invention. The aircraft assembly 3400 of Figure 34 illustratively includes wing portions, collectively 3410, a fuselage 3420, a vertical propulsion system, collectively 3430 and a horizontal propulsion system, collectively 3440. The fuselage 3420 may be configured to include a cockpit, a cargo compartment and/or a passenger cabin (not shown). As depicted in the embodiment of Figure 34, the vertical propulsion system 3430 may include at least two thrusters, while the horizontal propulsion system 3440 may include two jet propulsion engines. In addition, in accordance with various embodiments of the present invention, the aircraft assembly 3400 may include other systems such as landing gear, vertical propulsion air vents, empennage, additional lifting surfaces, external pods and containers, external power systems such as solar photovoltaic modules and other systems (not shown). Furthermore, in various embodiments of the present invention, the aircraft assembly 3400 may include various sensors for flight control systems, including vortex sensors for enabling close formation flight (not shown). Vortex sensors may provide information to aircraft in a formation about the position of vortices produced by a leader aircraft in the formation, which in turn allows the flight control system to optimize the flight parameters of a follower aircraft for best flight performance.

Figure 35 shows a high level diagram of an aircraft assembly 3500 in accordance with an alternate embodiment of the present invention. The aircraft assembly 3500 of Figure 35 includes wing portions, collectively 3510, a fuselage 3520, a vertical propulsion system, collectively 3530 and a horizontal propulsion system, collectively 3540. The fuselage 3520 may be configured to include a cockpit, a cargo compartment and/or a passenger cabin (not shown). As depicted in the embodiment of Figure 35, the vertical propulsion system 3530 may include four thrusters, while the horizontal propulsion system 3540 may include two jet propulsion engines. In addition, the design of the fuselage 3520 may be modular, so that at least a section of or a whole fuselage 3520 may be separable and can be controllably separated from the rest of the airframe.

Figure 36 shows a high level diagram of an aircraft assembly, such as the aircraft assembly 3500 of Figure 35, having a detached fuselage in accordance with an embodiment of the present principles. The aircraft assembly 3600 of Figure 36 depicts the wing portions 3510 of the aircraft assembly 3500 of Figure 35, a mounting system 3725 for a fuselage or a section of a fuselage and the vertical propulsion system 3530 and the horizontal propulsion system 3540 of the aircraft assembly 3500 of Figure 35. Similar to the aircraft assembly 3500 of Figure 35, the aircraft assembly 3600 of Figure 36 may be an autonomously or remotely piloted aircraft and thus include a flight control system (not shown) with autonomous flight capabilities (e.g., an auto-pilot system). Additional capabilities of the aircraft assembly 3600 may include the ability to locate and mount a fuselage or a section of a fuselage onto its mounting system 3625. This can be achieved for example during the vertical descent of the aircraft assembly 3600 while the fuselage or its section is positioned on the ground.

Figure 37 shows a high level diagram of a cargo pod (or similarly an HC pod) 3700 in accordance with an embodiment of the present principles. The cargo pod 3700 of Figure 37 can be attached to the aircraft 3600 as a part of its fuselage using the mounting system 3625. As depicted in Figure 37, the cargo pod 3700 may include a pod frame 3710, a cabin 3720 and a ground transport system 3730. The cabin 3720 may be used to transport cargo and passengers. The ground transport system 3730 may include wheels and powertrain (not shown) providing the capabilities to drive the cargo pod 3700 on the ground surface. In accordance with various embodiments of the present invention, the ground transport system 3730 may be driven by a passenger, remotely or autonomously using an autonomous driving computer system (not shown) on board the cargo pod 3700. In various embodiments, the ground transport system 3730 may also be separable from the rest of the cargo pod 3700, so that it can separate and remain on the ground after the cargo pod 3700 is mounted onto an aircraft assembly in accordance with the present principles.

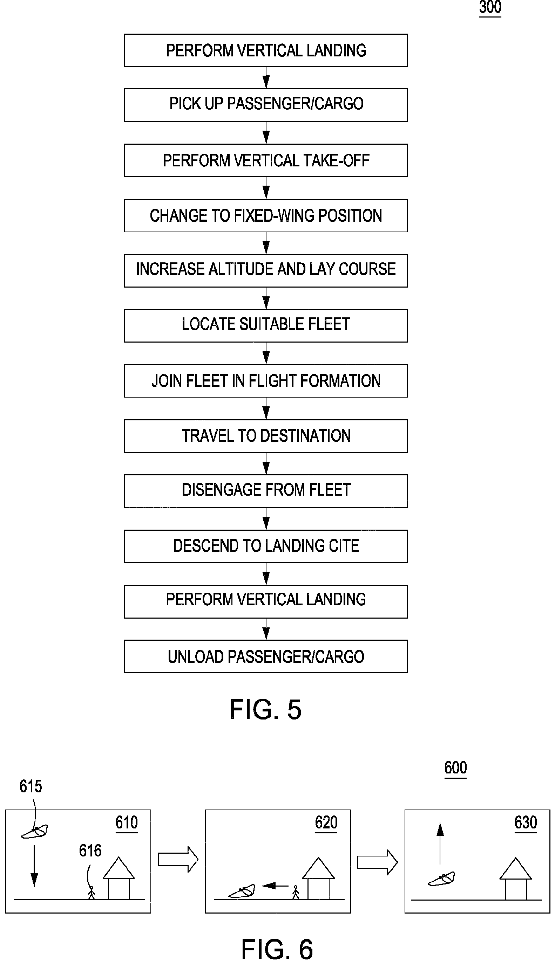

Figure 38 shows a high level schematic diagram of a loading method 3800 in accordance with an embodiment of present invention. The loading method 3800 of Figure 38 depicts an example of using an aircraft like the aircraft assembly 3600 of Figure 36 and a cargo pod like the cargo pod 3700 of Figure 37 in accordance with embodiments of the present invention. The loading method 3800 of Figure 38 can be considered as a modified loading method of Figure 6. In the embodiment of a loading method 3800 of Figure 38, an area on the ground 3810 is used to locate a cargo pod 3820 using a VTOL aircraft 3830 of embodiments of the present invention. In the embodiment of Figure 38, different ground transportation means may be used to transport the cargo pod 3820 on the ground before loading and mounting to an aircraft assembly of the present invention. Such ground transportation means may include built-in means (e.g., self-propulsion) and assisted means (e.g. specialized ground transport vehicles for cargo pods). In accordance with various embodiments of the present invention, before landing and loading, the VTOL aircraft 3830 may have an open bay area (not shown) in its fuselage mounting system. Upon landing or while hovering in a stable position above the cargo pod 3820, the VTOL aircraft 3830 may attach the pod to its mounting frame as a part of its fuselage and assume a new aircraft configuration 3835, in which the cargo pod 3820 is now a part of the VTOL aircraft and in one embodiment part of its fuselage. In alternate embodiments of the present invention, other mounting approaches in differently situated bay areas on an aircraft assembly of the present invention may be implemented using the loading method 3800 of Figure 38.

Figure 39 shows a high level diagram of an aircraft assembly 3900 in accordance with an alternate embodiment of the present invention. The aircraft assembly 3900 of Figure 39 includes wing portions, collectively 3910, a fuselage frame 3920 and cargo pods, collectively 3930. In the embodiment of Figure 39, the cargo pods 3930 may be loaded and unloaded individually and independently from each other, so that different cargo and passengers may be loaded and unloaded at several different locations. In addition, cargo pods may be loaded into other parts of the aircraft assembly 3900, such as wings and tails, and attached as standalone units to a fuselage, wings or a tail. In accordance with the present invention, an aircraft fuselage may be segmented into multiple sections and thus contain multiple cargo pods.

## Claims

1. An aircraft for vertical take-off and landing, comprising
at least one first wing portion providing a lift force during a horizontal flight;
multiple circular wing openings with air vents which are configured to be opened and closed independently from each other so as to open or close the wing openings, wherein the aircraft is configured to provide a first configuration wherein the air vents are all fully closed, a second configuration wherein some air vents are open and some air vents are fully closed, and a third configuration wherein the air vents are all fully open, wherein at least one wing opening (1520) is disposed on a vertical axis of the at least one first wing portion; a shaft-less vertical thruster (240) positioned inside each wing opening to provide vertical thrust during a vertical flight, wherein the at least one vertical thruster is a propeller-based thruster including a propeller, wherein the propeller comprises a rim-mounted propeller having no central hub; and a horizontal propulsion system (3250).

2. The aircraft of claim 1, wherein the air vents comprise louvres (2040) positioned inside the at least one wing opening to close the opening during flight.

3. The aircraft of claim 2, wherein the closed area of the wing opening provides a lift force during horizontal flight.

4. The aircraft of any of claims 2 to 3, wherein the louvres (2040) in a closed position provide at least one surface that follows a shape of an airfoil of the at least one first wing portion.

5. The aircraft of any of claims 1 to 4, comprising a modular fuselage (202), wherein the fuselage comprises at least one pod (3700) and wherein the pod is separable from the fuselage and is used to contain at least one of cargo and passengers.

6. The aircraft of claim 5, wherein the at least one pod (3700) comprises multiple pods.

7. The aircraft of any of claims 5 to 6, wherein the at least one pod (3700) comprises means for ground transportation.

8. The aircraft of any of claims 1 to 7, further comprising a second wing portion, wherein the second wing portion is offset from the at least one first wing portion in at least one of the vertical and horizontal directions.

9. The aircraft of any of claims 1 to 8 wherein the at least one propeller-based thruster has the ability to provide control of at least one of pitch, roll and yaw during flight.

10. The aircraft of any of claims 1 to 9, comprising at least one horizontal thruster (250) positioned along a horizontal axis of the aircraft for providing horizontal thrust during flight.

## Patentansprüche

1. Flugzeug zum vertikalen Starten und Landen, umfassend
mindestens einen ersten Flügelabschnitt, der während eines Horizontalflugs eine Auftriebskraft bereitstellt;
mehrere kreisförmige Flügelöffnungen mit Lüftungsöffnungen, die dazu konfiguriert sind, zum Öffnen oder zum Schließen der Flügelöffnungen unabhängig voneinander geöffnet und geschlossen zu werden, wobei das Flugzeug zum Bereitstellen einer ersten Konfiguration, wobei die Lüftungsöffnungen alle vollständig geschlossen sind, einer zweiten Konfiguration, wobei einige Lüftungsöffnungen offen und einige Lüftungsöffnungen vollständig geschlossen sind, und einer dritten Konfiguration, wobei die Lüftungsöffnungen alle vollständig offen sind, konfiguriert ist, wobei mindestens eine Flügelöffnung (1520) auf einer vertikalen Achse des mindestens einen ersten Flügelabschnitts angeordnet ist;
ein wellenloses Vertikaltriebwerk (240), das innerhalb jeder Flügelöffnung positioniert ist, um vertikalen Schub während eines vertikalen Flugs bereitzustellen, wobei das mindestens eine Vertikaltriebwerk ein propellerbasiertes Triebwerk ist, das einen Propeller aufweist, wobei der Propeller einen randmontierten Propeller umfasst, der keine zentrale Nabe aufweist; und
ein Horizontalantriebssystem (3250).

2. Flugzeug nach Anspruch 1, wobei die Lüftungsöffnungen Lamellen (2040) umfassen, die zum Schließen der Öffnung während des Fluges innerhalb der mindestens einen Flügelöffnung positioniert sind.

3. Flugzeug nach Anspruch 2, wobei der geschlossene Bereich der Flügelöffnung während des Horizontalflugs eine Auftriebskraft bereitstellt.

4. Flugzeug nach einem der Ansprüche 2 bis 3, wobei die Lamellen (2040) in einer geschlossenen Position mindestens eine Oberfläche bereitstellen, die einer Form eines Tragflächenprofils des mindestens einen ersten Flügelabschnitts folgt.

5. Flugzeug nach einem der Ansprüche 1 bis 4, umfassend einen modularen Rumpf (202), wobei der Rumpf mindestens eine Gondel (3700) umfasst und wobei die Gondel von dem Rumpf trennbar ist und zum Aufnehmen mindestens eines von Fracht und Passagieren verwendet wird.

6. Flugzeug nach Anspruch 5, wobei die mindestens eine Gondel (3700) mehrere Gondeln umfasst.

7. Flugzeug nach einem der Ansprüche 5 bis 6, wobei die mindestens eine Gondel (3700) Mittel zum Bodentransport umfasst.

8. Flugzeug nach einem der Ansprüche 1 bis 7, ferner umfassend einen zweiten Flügelabschnitt, wobei der zweite Flügelabschnitt von dem mindestens einen ersten Flügelabschnitt in mindestens einer der vertikalen und der horizontalen Richtung versetzt ist.

9. Flugzeug nach einem der Ansprüche 1 bis 8, wobei das mindestens eine propellerbasierte Triebwerk die Fähigkeit aufweist, während des Fluges die Steuerung von mindestens einem von Neigen, Rollen und Gieren bereitzustellen.

10. Flugzeug nach einem der Ansprüche 1 bis 9, umfassend mindestens ein Horizontaltriebwerk (250), das zum Bereitstellen von horizontalem Schub während des Fluges entlang einer horizontalen Achse des Flugzeugs positioniert ist.

## Revendications

1. Aéronef permettant un décollage et un atterrissage verticaux, comprenant
au moins une première portion d'aile fournissant une force de sustentation pendant un vol horizontal ;
plusieurs ouvertures d'aile circulaires avec des prises d'air qui sont configurées pour être ouvertes et fermées indépendamment les unes des autres de manière à ouvrir ou fermer les ouvertures d'aile, dans lequel l'aéronef est configuré pour fournir une première configuration dans laquelle les prises d'air sont toutes entièrement fermées, une seconde configuration dans laquelle certaines prises d'air sont ouvertes et certaines prises d'air sont entièrement fermées, et une troisième configuration dans laquelle les prises d'air sont toutes complètement ouvertes, l'au moins une ouverture d'aile (1520) étant disposée sur un axe vertical de l'au moins une première partie d'aile ;
un propulseur vertical sans arbre (240) positionné à l'intérieur de chaque ouverture d'aile pour fournir une poussée verticale pendant un vol vertical, l'au moins un propulseur vertical étant un propulseur à hélice comportant une hélice, l'hélice comprenant une hélice montée sur une jante n'ayant pas de moyeu central ; et
un système de propulsion horizontale (3250).

2. Aéronef selon la revendication 1, dans lequel les prises d'air comprennent des volets (2040) positionnés à l'intérieur de l'au moins une ouverture d'aile pour fermer l'ouverture pendant le vol.

3. Aéronef selon la revendication 2,
dans lequel la zone fermée de l'ouverture d'aile fournit une force de sustentation pendant un vol horizontal.

4. Aéronef selon l'une quelconque des revendications 2 à 3,
dans lequel les volets (2040) dans une position fermée fournissent au moins une surface qui épouse la forme d'un profil aérodynamique de l'au moins une première partie d'aile.

5. Aéronef selon l'une quelconque des revendications 1 à 4,
comprenant un fuselage modulaire (202),
dans lequel le fuselage comprend au moins une nacelle (3700) et dans lequel la nacelle est séparable du fuselage et est utilisée pour contenir au moins une cargaison et des passagers.

6. Aéronef selon la revendication 5,
dans lequel l'au moins une nacelle (3700) comprend plusieurs nacelles.

7. Aéronef selon l'une quelconque des revendications 5 à 6,
dans lequel l'au moins une nacelle (3700) comprend des moyens de transport terrestre.

8. Aéronef selon l'une quelconque des revendications 1 à 7,
comprenant en outre une seconde partie d'aile,
dans lequel la seconde partie d'aile est décalée de l'au moins une première partie d'aile dans la direction verticale et/ou la direction horizontale.

9. Aéronef selon l'une quelconque des revendications 1 à 8
dans lequel l'au moins un propulseur à hélice a la capacité d'assurer le contrôle du tangage et/ou du roulis et/ou du lacet pendant le vol.

10. Aéronef selon l'une quelconque des revendications 1 à 9,
comprenant au moins un propulseur horizontal (250) positionné le long d'un axe horizontal de l'aéronef pour fournir une poussée horizontale pendant le vol.
